# EUROPEAN PATENT SPECIFICATION

(11) **EP 3 740 686 B1**
(45) Date of publication and mention of the grant of the patent: **25.01.2023**
(21) Application number: 20744669.1
(22) Date of filing: 08.01.2020
(51) Int. Cl.: F16B 11/00, B23P 19/00, B23P 19/06, F16L 23/00, F16L 23/14, F24F 13/02

(54) **SERIAL SCREW ATTACHING SYSTEM ON CLIPS**
REIHENSCHRAUBENBEFESTIGUNGSSYSTEM AUF KLAMMERN
SYSTÈME DE FIXATION DE VIS EN SÉRIE SUR DES ATTACHES

(30) Priority: 23.01.2019 TR 201901044
(43) Date of publication of application: 25.11.2020
(73) Proprietor: Sente Makina Insaat Sanayi Ve Ticaret Limited Sirketi, Büyükcekmece/Istanbul (TR)
(72) Inventor: DOGAN, Yavuz, Beylikdüzü/Istanbul (TR); KIRANTAY, Ali Lütfü, Beylikdüzü/Istanbul (TR)
(74) Representative: Tasçi, Abdurrahman
(86) International application number: PCT/TR2020/050010
(87) International publication number: WO 2020/153926

(56) References cited:
- EP-A2- 2 020 554
- CN-A- 102 729 038
- CN-U- 203 266 472
- CN-U- 204 165 193
- CN-U- 204 248 375
- CN-U- 205 437 757
- CN-U- 206 936 792
- CN-U- 207 255 645
- JP-A- H03 196 926
- US-A- 4 815 206

## Description

### Technological Area:

This invention relates to a serial screw attaching system on clips enabling the connection of screws with clips used for fixing ventilation ducts in ventilation and climatization industries.

### Current Situation of The System:

Today need for ventilation and climatization systems is increasing due to the increasing population and thus the indoor environments in cities. The problem related to ventilation especially in communal life areas is being solved with central climatization-ventilation systems. Ventilation ducts are very important for these sytems to work efficiently.

There are various systems developed to manufacture some specific sizes of ducts used in ventilation-climatization systems. With these systems rectangular, square and round air ducts are being manufactured and ventilation systems specific for the needs are being installed. There are different methods used to attach air ducts and compose the duct system. These are: S lock and slide system, ducts with driven flanges and self-flanged ducts. When manufacturing usual ducts with driven flanges first the sheet is bended to form a duct, then flnages are produced according to the side lengths of the duct and manually driven on the connection points of the ducts and air ducts are made ready to be attached each other.

Assembly clips are of great importance in fixing ventilation ducts to each other. And then there's the process of attaching assembly clips with press screws. For this process step there are machines manufactured working serially. But in this manufactured machines, the process of attaching press screws to clips, is taking high costs and long times.

In the patent application numbered TR201303381, "One connection clip" is being described. The invention is a connection clip enabling the detachable connection of two pieces made of plastic, metal etc.

In the patent application numbered TR201412631, "Connection clip set-up" has been described. It's about a set-up containing the bearing where the connection clip is seated on; the connection clip to be connected with the said lower piece; fixing tab located on the upper piece enabling the said connection clip to be connected with the upper piece by locking on the said locking slot.

There's a connection clip being described in the patent applications mentioned above.

The described product is used in fixing low-endurance parts in white goods and automative industries. It's not possible fort hem to be used in fixing metal and metal-like parts. But said systems don't involve a setting about serial attaching of clips and screws. Clips are attached to screws all manually in these systems.

As seen in the system shown in http://www.youtube.com/watch?v=TNLETyEr6zw screw attaching to crochet system is considered. But as well as the operating system is not efficient it's also high at cost and hard to use. The difficulty in assembling the system is making the production time longer and it also increases the costs because of the time-taking spare part replacement.

CN 203 266 472 U discloses a system suitable for serial screw attachment on clips, which involves a magnetic holder and a clench key.

As a conclusion there's a need for a low-cost new technology with a different design, low production time, high fixing performance, that overcomes the disadvantages mentioned above and enables clips and screws to be serially connected with each other.

### The Invention Definition:

The present invention is defined in claim 1. Preferred variants of the invention are presented in the dependent claims.

This invention is the development made in serial screw attachment system on clips and its' characteristic is being a low-cost new technology with a different design, low production time, high fixing performance and that enables clips and screws to be serially connected with each other.

In the Utility Model application numbered TR201603975, the "Duct Assembly Clip Manufacturing Machine" has been explained to the applicant. This invention is about the duct assembly clip manufacturing machine and it involves the driver group, driver, tap, alignment, holder, puller, plunger 1, fixer, connection group, mould group, connection pieces 1, mould, blade, connection pieces 2, pusher, tapping, plunger 2, support piece, eccentric press, invertor, roll opener, sheet and the finished product.

In the Utility Model application numbered TR201603975, the "Duct Assembly Clip" has been explained to the applicant. This invention is about the duct assembly clip used in fixing the ducts in ventilation and climatization industries and its' characteristic is being consisted of at least one tie piece located inside preferably on the corner closer to the press screw hole and the fixing curve located in parallel with the press screw hole axis.

In the utility model/patent applications belonging to the applicant mentioned above, assembly clips are considered. The applicant provides the clips manufacturing with the help of these applications made. After the clips manufacturing process there's the process of clips being attached to the screws. At this stage the applicant introduces the product subject to invention which he provides serial attachment of screws to the clips.

All the advantages of the method subject to invention will be understood clearer with the diagram given below and the detailed description written by referring this diagram so for this reason the assessment should be made considering this diagram and the detailed description.

### Description of Figures:

The invention will be described by referring the figures enclosed, this way the characteristics of the invention will be understood and assessed clearer, but this is not intended to limit the invention with this specific arrangements. Vice versa it's intended to cover all alternatives, changes and equivalents which can be involved under the area the invention is defined in by the claims enclosed. It must be understood that the shown details are given only for the description of the preferred arrangements of the current invention and presented to provide the most utilisable and clear definition of both the formation of the methods and the rules and conceptual characteristics of the invention.

In these figures;

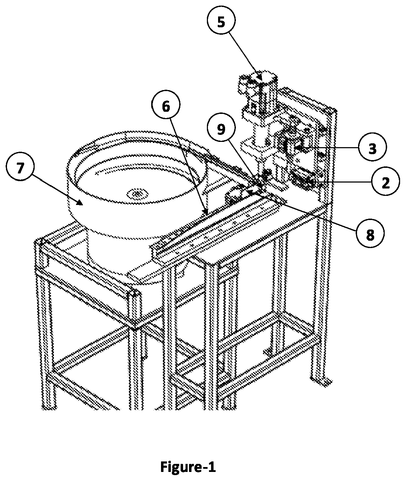

- Figure 1: Perspective view of the system.

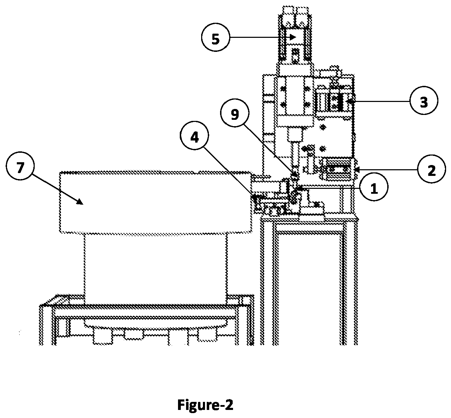

- Figure 2: Front view of the system.

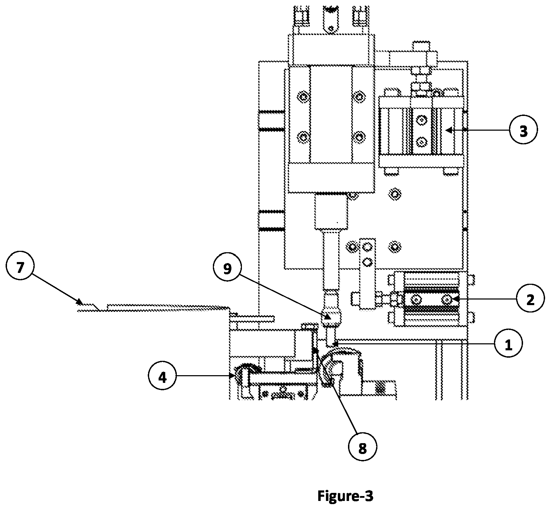

- Figure 3: Detailed front view of the system.

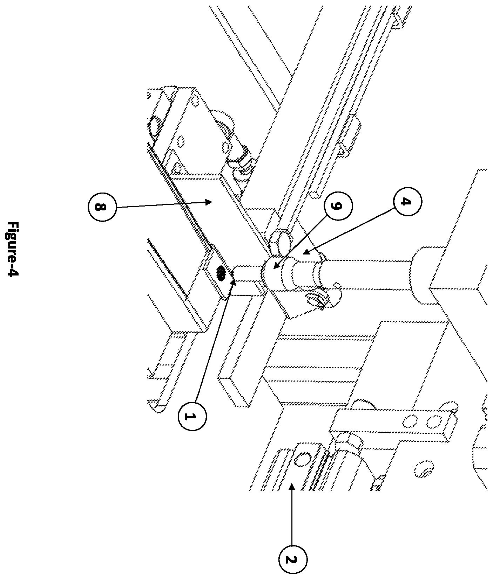

- Figure 4: Detailed perspective view of the system.

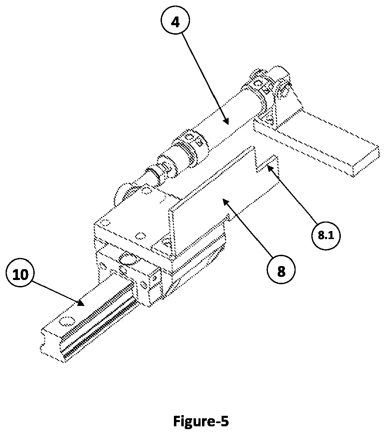

- Figure 5: Perspective view of the third plunger and the holder plate.

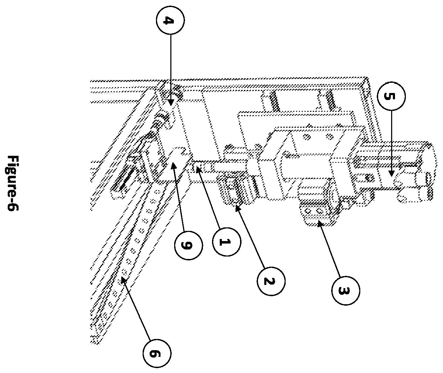

- Figure 6: Perspective view of the system.

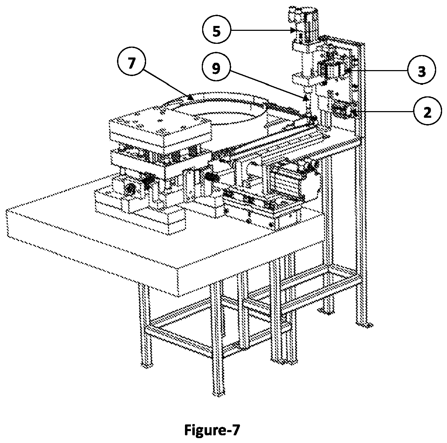

- Figure 7: Perspective view of the system.

The figures that will help out to understand this invention are numbered as specified in the enclosed figure and they're given below by their names.

### Description of References:

- 1.: Magnetic Holder
- 2.: First Plunger
- 3.: Second Plunger
- 4.: Third Plunger
- 5.: Servo Motor
- 6.: Clip Position Changer
- 7.: Screw Setter Unit
- 8.: Holder Plate
8.1 Through Gap
- 9.: Clench Key
- 10.: Slide

### Description of Invention:

The invention is consisting of a helically formed clip position changer (6), a servo motor (5) transferring rotary motion to the clench key (9), a first plunger (2) and a second plunger (3) enabling the clench key (9) to operate on two axis, a holder plate (8) properly positioning the screws coming from the screw setter unit (7) and enabling the magnetic holder (1) determine them and a third plunger (4) transferring forward and backward motion to the holder plate (8) (Figure-1, Figure-2, Figure-3, Figure-4, Figure-5, Figure-6, Figure-7).

The invention preferably involves the second plunger (3) that enables the screws to be attached to the clips by the clench key (9) rotating with the help of servo motor (5) and for this, moves the clench key (9) upwards and downwards (Figure-1, Figure-2, Figure-3, Figure-4, Figure-6, Figure-7).

The invention preferably involves a clip position changer (6) that enables clips holes for screws to be positioned as to come across with the head of the clench key (9), without a need for any extra action (Figure -1, Figure -2, Figure -3, Figure -4, Figure -6, Figure -7).

The invention preferably makes a 90 degrees difference between the angle of the clips where they enter the clip position changer (6) and where they reach the end of the clip position changer (6) (Figure -1, Figure -6).

The invention preferably involves the helically formed clip position changer (6) that enables clips to rotate 90 degrees (Figure -1, Figure -6).

The invention preferably involves a first plunger (2) that gains the clench key (9) a right-left motion (Figure -1, Figure -2, Figure -3, Figure -4, Figure -6, Figure -7).

To prevent the coming screw from falling off as a result of the forward motion by the third plunger (4), the invention preferably involves the holder plate (8) that gets back to its' former position (Figure -1, Figure -2, Figure -3, Figure -4, Figure -5, Figure -6).

The invention preferably involves the holder plate (8) which has a through gap (8.1) on itself (Figure-5). While the holder plate (8) that has been moved forward by the third plunger (4) is at this position, the through gap (8.1) provides required area for the screws connected to the clench key (9) to move easily to come across with the top of the clip (Figure -4, Figure -5). The invention preferably involves the slide (10) that enables the holder plate (8) to easily move forward and backward (Figure-5).

### Detailed Description of Invention:

The main elements involved in the invention are; the magnetic holder (1), the first plunger (2), the second plunger (3), the third plunger (4), the servo motor (5), clip position changer (6), the screw setter unit (7), the holder plate (8), the clench key (9) and the slide (10) (Figure -1, Figure -2, Figure -3, Figure -4, Figure -5, Figure -6, Figure -7).

The operating of the product subject to invention is as follows; first clips, more than one in quantity, are aligned on the clip position changer (6) (Figure -1, Figure -6). As the clips move upon the clip position changer (6) they also change their angles (Figure-1, Figure-6). There's a 90 degrees difference between the angle of the clip where it enters and where it reaches to the end of the clip position changer (6) (Figure -1, Figure -6) Clip position changer (6) is manufactured in this way and it's a special design (Figure - 1, Figure -6) When clips reaches to the end of the clip position changer (6) there's the clench key (9) right on top of the clips (Figure -1, Figure -2, Figure -3, Figure -4, Figure -6, Figure -7). At this stage, keeping the clench key (9) at the proper distance is maintained by the upward-downward motion of the second plunger (3) (Figure -1, Figure -2, Figure -3, Figure -4, Figure -6, Figure -7).

Screws coming from the screw setter unit (7) are moving towards the screw holder plate (8) (Figure-1, Figure-2, Figure-3, Figure-4, Figure-5, Figure-7). After the screw touches the holder plate (8) first plunger (2) moves the clench key (9) towards the holder plate (8) and the second plunger (3) moves downward (Figure-1, Figure-2, Figure-3, Figure-4, Figure-5, Figure-6, Figure-7). While the clench key (9) is being moved upward and downward by the second plunger (3) it's rotated by the servo motor (5) especially while being moved downward (Figure-1, Figure-2, Figure-3, Figure-4, Figure-6, Figure-7). The first screw touching the holder plate (8) is holded by the magnetic holder (1) that's connected to the head of the clench key (9) (Figure-1, Figure-2, Figure-3, Figure-4, Figure-5, Figure-6, Figure-7). After the screw is taken by the magnetic holder (1) the holder plate (8) is moved forward by the third plunger (4) upon the slide (10) (Figure-1, Figure-2, Figure-3, Figure-4, Figure-5, Figure-6). While the holder plate (8) is on the forward direction, the screw taken by the clench key (9) easily passes through the through gap (8.1) located at the back of the holder plate (8) and is moved towards the screw hole on the clip. The holder plate (8) being moved forward by the third plunger (4), is taken back to its' former (initial) position to prevent the other screw to fall off (Figure-1, Figure-2, Figure-3, Figure-4, Figure-5, Figure-6). In this way the screw is attached to the screw hole on the clip.

## Claims

1. Serial screw attachment system on clips, which involves a magnetic holder (1) and a clench key (9) and **characterized in that** it is being consisted of;
- helically formed clip position changer (6),
- servo motor (5) that transfers rotary motion to the clench key (9),
- first plunger (2) and second plunger (3) that enables the clench key (9) to operate on two axis,
- holder plate (8) that properly positions the screws coming from the screw setter unit (7) and makes them determined by the magnetic holder (1) and
- third plunger (4) that transfers forward and backward motion to the holder plate (8).

2. Serial screw attachment system on clips according to claim 1, **characterized by** involving the second plunger (3) that enables the screws to be attached to the clips by the clench key (9) rotated with the help of the servo motor (5) and for this, moves the clench key (9) upward and downward.

3. Serial screw attachment system on clips according to claim 1, **characterized by** involving the clip position changer (6) that enables clips holes for screws to be positioned as to come across with the head of the clench key (9), without a need for any extra action.

4. Serial screw attachment system on clips according to claim 1, **characterized by** making a 90 degrees difference between the angle of the clips where they enter the clip position changer (6) and where they reach the end of the clip position changer (6).

5. Serial screw attachment system on clips according to claim 1 or claim 4, **characterized by** involving the helically formed clip position changer (6) that enables clips to rotate 90 degrees.

6. Serial screw attachment system on clips according to claim 1, **characterized by** involving the first plunger (2) that gains the clench key (9) a right-left motion.

7. Serial screw attachment system on clips according to claim 1, **characterized by** involving the holder plate (8) that gets back to its' former position to prevent the coming screw from falling off as a result of the forward motion by the third plunger (4).

8. Serial screw attachment system on clips according to claim 1, **characterized by** involving the holder plate (8) which has a through gap (8.1) on itself.

9. Serial screw attachment system on clips according to claim 1 or claim 8, **characterized by** involving the through gap (8.1) which provides required area for the screws connected to the clench key (9) to move easily to come across with the top of the clip while the holder plate (8) that has been moved forward by the third plunger (4) is at this position.

10. Serial screw attachment system on clips according to claim 1, **characterized by** involving the slide (10) that enables the holder plate (8) to easily move forward and backward.

## Patentansprüche

1. Serielles Schraubbefestigungssystem an Clips, das einen magnetischen Halter (1) und einen Klemmschlüssel (9) umfasst, **dadurch gekennzeichnet, dass** sie aus den folgenden Elementen besteht:
- einem schraubenförmig geformten Clip-Positionswechsler (6),
- einem Servomotor (5), der eine Drehbewegung auf den Klemmschlüssel (9) überträgt,
- einen ersten Stößel (2) und einen zweiten Stößel (3), der es dem Klemmschlüssel (9) ermöglicht, auf zwei Achsen zu arbeiten,
- eine Halteplatte (8), die die von der Schraubensetzeinheit (7) kommenden Schrauben richtig positioniert und sie durch den magnetischen Halter (1) bestimmt, und
- einen dritten Stößel (4), der die Vorwärts- und Rückwärtsbewegung auf die Halteplatte (8) überträgt.

2. Serielles Schraubenbefestigungssystem an Clips nach Anspruch 1, **dadurch gekennzeichnet, dass** es den zweiten Stößel (3) umfasst, der die Befestigung der Schrauben an den Clips durch den Klemmschlüssel (9) ermöglicht, der mit Hilfe des Servomotors (5) gedreht wird und zu diesem Zweck den Klemmschlüssel (9) nach oben und nach unten bewegt.

3. Serielles Schraubenbefestigungssystem an Clips nach Anspruch 1, **dadurch gekennzeichnet, dass** es den Clip-Positionswechsler (6) umfasst, der es ermöglicht, die Löcher der Clips für die Schrauben so zu positionieren, dass sie mit dem Kopf des Klemmschlüssels (9) übereinstimmen, ohne dass eine zusätzliche Aktion erforderlich ist.

4. Serielles Schraubbefestigungssystem an Clips nach Anspruch 1, **dadurch gekennzeichnet, dass** zwischen dem Winkel der Clips, in dem sie in den Clip-Positionswechsler (6) eintreten, und dem Winkel, in dem sie das Ende des Clip-Positionswechslers (6) erreichen, eine Differenz von 90 Grad gebildet wird.

5. Serielles Schraubbefestigungssystem an Clips nach Anspruch 1 oder Anspruch 4, **dadurch gekennzeichnet, dass** es den schraubenförmig geformten Clip-Positionswechsler (6) umfasst, der eine Drehung der Clips um 90 Grad ermöglicht.

6. Serielles Schraubbefestigungssystem an Clips nach Anspruch 1, **dadurch gekennzeichnet, dass** es den ersten Stößel (2) umfasst, der dem Klemmschlüssel (9) eine Rechts-Links-Bewegung verleiht.

7. Serielles Schraubenbefestigungssystem an Clips nach Anspruch 1, **dadurch gekennzeichnet, dass** es die Halteplatte (8) umfasst, die in ihre frühere Position zurückkehrt, um zu verhindern, dass die kommende Schraube infolge der Vorwärtsbewegung des dritten Stößels (4) herunterfällt.

8. Serielles Schraubenbefestigungssystem an Clips nach Anspruch 1, **dadurch gekennzeichnet, dass** es die Halteplatte (8) umfasst, die einen durchgehenden Spalt (8.1) an sich hat.

9. Serielles Schraubbefestigungssystem an Clips nach Anspruch 1 oder Anspruch 8, **dadurch gekennzeichnet, dass** sie den durchgehenden Spalt (8.1) aufweist, der den Schrauben, die mit dem Klemmschlüssel (9) verbunden sind, die nötige Fläche bietet, um sich leicht zu bewegen und mit der Oberseite des Clips zusammenzukommen, während sich die Halteplatte (8), die durch den dritten Stößel (4) nach vorne bewegt wurde, in dieser Position befindet.

10. Serielles Schraubbefestigungssystem an Clips nach Anspruch 1, **dadurch gekennzeichnet, dass** sie den Schieber (10) umfasst, der eine leichte Vorwärts- und Rückwärtsbewegung der Halteplatte (8) ermöglicht.

## Revendications

1. Système de fixation par vis en série sur des clips qui comprend une retenue magnétique (1) et une clé de serrage (9), **caractérisé en ce qu'**il se compose des éléments suivants :
- un changeur (6) de position de clip de forme hélicoïdale,
- un servomoteur (5) qui transfère le mouvement rotatif à la clé de serrage (9),
- un premier piston (2) et un deuxième piston (3) qui permet à la clé de serrage (9) de fonctionner sur deux axes,
- une plaque de support (8) qui positionne correctement les vis provenant de l'unité (7) de régleur de vis et permet leur détermination par la retenue magnétique (1), et
- un troisième piston (4) qui transfère le mouvement vers l'avant et vers l'arrière à la plaque de support (8).

2. Système de fixation par vis en série sur des clips selon la revendication 1, **caractérisé en ce qu'**il implique le deuxième piston (3) qui permet aux vis d'être fixées aux clips par la clé de serrage (9) mise en rotation à l'aide du servomoteur (5) et pour cela, déplace la clé de serrage (9) vers le haut et vers le bas.

3. Système de fixation par vis en série sur des clips selon la revendication 1, **caractérisé en ce qu'**il implique le changeur (6) de position de clip qui permet de positionner les trous des clips pour les vis de façon à ce qu'ils se croisent avec la tête de la clé de serrage (9), sans qu'aucune action supplémentaire ne soit nécessaire.

4. Système de fixation par vis en série sur des clips selon la revendication 1, **caractérisé en ce qu'**une différence de 90 degrés est formée entre l'angle des clips où ils entrent dans le changeur (6) de position de clip et où ils atteignent l'extrémité du changeur (6) de position de clip.

5. Système de fixation par vis en série sur des clips selon la revendication 1 ou la revendication 4, **caractérisé en ce qu'**il implique le changeur (6) de position de clip de forme hélicoïdale qui permet aux clips de tourner de 90 degrés.

6. Système de fixation par vis en série sur des clips selon la revendication 1, **caractérisé en ce qu'**il implique le premier piston (2) qui confère à la clé de serrage (9) un mouvement droite-gauche.

7. Système de fixation par vis en série sur des clips selon la revendication 1, **caractérisé en ce qu'**il implique la plaque de support (8) qui revient à sa position antérieure pour empêcher la vis qui vient de tomber en raison du mouvement vers l'avant du troisième piston (4).

8. Système de fixation par vis en série sur des clips selon la revendication 1, **caractérisé en ce qu'**il implique la plaque de support (8) qui présente sur elle-même un espace traversant (8.1).

9. Système de fixation par vis en série sur des clips selon la revendication 1 ou la revendication 8, **caractérisé en ce qu'**il implique l'espace traversant (8.1) qui fournit la surface requise pour que les vis reliées à la clé de serrage (9) se déplacent facilement pour venir en contact avec le haut du clip tandis que la plaque de support (8) qui a été déplacée vers l'avant par le troisième piston (4) est à cette position.

10. Système de fixation par vis en série sur des clips selon la revendication 1, **caractérisé en ce qu'**il implique la glissière (10) qui permet à la plaque de support (8) de se déplacer facilement vers l'avant et vers l'arrière.
